# DEMANDE DE BREVET EUROPEEN

(11) **EP 4 187 727 A1**
(43) Date de publication de la demande: **31.05.2023**
(21) Numéro de dépôt: 21306657.4
(22) Date de dépôt: 29.11.2021
(51) Int. Cl.: H02B 13/045

(54) **PROCÉDÉ DE COLMATAGE D'UNE JONCTION À SURFACE ET CONTRE-SURFACE DE CONTACT D'UN ÉLÉMENT D'UN COMPARTIMENT DE POSTE ÉLECTRIQUE SOUS ENVELOPPE MÉTALLIQUE À ISOLATION GAZEUSE ET JONCTION RÉSULTANTE**

(71) Demandeur: RTE RESEAU DE TRANSPORT D'ELECTRICITE, 92073 Paris La Défense Cedex (FR)
(72) Inventeur: DURAND, Fabrice, 69500 Bron (FR)
(74) Mandataire: Bonnet, Michel

(57) **Abrégé**

Ce procédé de colmatage d'une jonction à surface et contre-surface de contact (56) d'un élément d'un compartiment de poste électrique sous enveloppe métallique à isolation gazeuse comporte l'injection d'un produit de colmatage dans un volume inter-joint (66) formé entre la surface et la contre-surface de contact par utilisation d'un conduit de reprise de fuite (68) débouchant dans le volume inter-joint (66). Avant l'injection, il comporte le perçage d'un conduit d'évent (76) différent du conduit de reprise de fuite (68) depuis l'extérieur du compartiment jusqu'au volume inter-joint (66). Au cours de l'injection, le produit de colmatage est injecté sous pression dans le volume inter-joint (66) jusqu'à le remplir puis sortir par le conduit d'évent (76).

## Description

La présente invention concerne un procédé de colmatage d'une jonction à surface et contre-surface de contact d'un élément d'un compartiment de poste électrique sous enveloppe métallique à isolation gazeuse. Elle concerne également une jonction à surface et contre-surface de contact résultant d'un tel colmatage.

Dans ce contexte d'un élément de compartiment de PSEM (pour « Poste électrique Sous Enveloppe Métallique », de l'anglais GIS pour « Gas-Insulated Substation ») à isolation gazeuse, c'est généralement de l'hexafluorure de soufre ou SF₆ qui risque de fuir, ce gaz circulant sous pression dans le compartiment en tant qu'isolant électrique et éventuellement thermique performant. Or ce gaz, bien que non toxique et *a priori* inoffensif pour l'homme, est un gaz à effet de serre dont le pouvoir de réchauffement global est 22 800 fois supérieur à celui du dioxyde de carbone. Sa consommation présente également un coût. Il est donc important de prévenir ou éviter toute fuite d'un tel gaz dans l'atmosphère.

Dans des éléments de compartiment de PSEM complexes à portions raccordées entre elles ou à des organes de fin de course, les raccords se font à l'aide de jonctions à brides et contre-brides, de jonctions à arbres et alésages, de disques de rupture, de densistats, de galettes isolantes entre les brides, de joints d'étanchéité, et constituent les points faibles à partir desquels les fuites ont de fortes chances de se produire, surtout lorsque le gaz est présent sous pression dans le compartiment. Mais lorsque les fuites sont légères, diffuses et que le gaz est difficilement détectable parce qu'incolore ou inodore, elles restent la plupart du temps difficiles voire impossibles à localiser précisément.

Par ailleurs colmater de telles fuites tout en maintenant sous pression et sous tension le compartiment de PSEM sur lequel elles se produisent est souvent une opération délicate. Il est en effet généralement exclu, bien que ce soit pourtant la solution idéale, de démonter les assemblages pour revoir les portées et changer les joints. Notamment les canalisations et autres éléments de compartiment de PSEM sont délicats et longs à démonter. Il se pose également un problème d'indisponibilité de la totalité de l'ouvrage, en particulier d'une portion du réseau de transport d'électricité qui utilise de tels compartiments de PSEM lorsque ceux-ci doivent être démontés, ce qui engendre des désagréments importants en termes d'exploitation. De ce fait, il est nécessaire de proposer des solutions de colmatage sans démontage ni interruption de fonctionnement.

Plusieurs méthodes sont principalement connues pour résoudre au moins temporairement les problèmes de fuites gazeuses sur des jonctions à brides de canalisations de compartiments de PSEM sans interruption de leur fonctionnement, notamment en y maintenant la pression de gaz et la tension électrique.

Selon une première méthode, une bande de tissu, par exemple en tissu de verre imprégné de résine, est enroulée sur la jonction à brides et dans son voisinage de part et d'autre de la jonction de manière à former un garrot. Cette méthode de colmatage externe semble simple mais présente une difficulté de pause sous pression. Par ailleurs, l'état de surface de la jonction à brides doit être préparé afin de faciliter l'adhérence de la bande. Elle condamne en outre la jonction à brides de tout accès ultérieur et empêche son démontage. Enfin, un tel colmatage doit résister à la pression du gaz de fuite et ne tient généralement pas dans la durée.

Selon une deuxième méthode de colmatage externe, on crée une enceinte autour de la jonction à brides à l'aide d'un coffrage hermétique, cette enceinte constituant ainsi un organe de reprise de fuite disposé en aval de la zone de fuite, et on y injecte éventuellement, par une ouverture prévue à cet effet, une résine liquide polymérisable, un gaz sous pression ou un joint préformé. Non seulement le coffrage hermétique peut s'avérer lourd et encombrant, voire même impossible à poser par rapport à des contraintes de support, tirant ou charpente, mais en outre la fuite gazeuse reste confinée dans une enceinte à une pression au moins égale à celle de l'intérieur de la canalisation. Un colmatage de ce type a ainsi du mal à tenir dans la durée. De plus, dans le cas où l'enceinte est remplie de résine polymérisable, cela condamne tout accès ultérieur à la jonction à brides.

Selon une troisième méthode, un produit de colmatage est injecté entre les brides de la jonction. Plus précisément, une bride est perforée et le produit est injecté au niveau de la galette isolante. Le produit est censé faire le tour de la bride, combler les éventuels interstices et arrêter la fuite en formant une nouvelle étanchéité. Plusieurs modes de réalisation de cette méthode de colmatage interne sont par exemple enseignés dans le document de brevet FR 2 489 918 dans un contexte plus général que celui des compartiments de PSEM. Elle nécessite selon ce document un usinage spécifiquement prévu pour l'injection à la conception mais présente l'avantage de pouvoir profiter le cas échéant de la présence d'un conduit de reprise de fuite aménagé dans au moins l'une des brides de la jonction de canalisation pour réaliser l'injection.

Conformément aux principes généraux de cette troisième méthode, l'invention s'applique plus particulièrement à un procédé de colmatage d'une jonction à surface et contre-surface de contact d'un élément d'un compartiment de poste électrique sous enveloppe métallique à isolation gazeuse, cette jonction comportant deux joints d'étanchéité enserrés entre la surface et la contre-surface de contact, disposés de manière à former un volume inter-joint fermé délimité par les deux joints d'étanchéité et par la surface et la contre-surface de contact, le procédé de colmatage comportant l'injection d'un produit de colmatage dans le volume inter-joint par utilisation d'un conduit de reprise de fuite aménagé dans l'épaisseur du compartiment, ce conduit débouchant dans le volume inter-joint.

Mais pour qu'un tel colmatage soit complet et stable dans le temps, il faut que le gaz préexistant dans le volume inter-joint soit totalement chassé et remplacé par le produit de colmatage. Or la méthode enseignée dans le document FR 2 489 918 ne le prévoit pas et ne le permet pas non plus de façon simple et efficace. Des bulles gazeuses restent de façon quasi certaine dans le volume inter-joint après l'injection du produit de colmatage.

Il peut ainsi être souhaité de prévoir un procédé de colmatage d'une jonction à surface et contre-surface de contact qui permette de s'affranchir d'au moins une partie des problèmes et contraintes précités.

Il est donc proposé un procédé de colmatage d'une jonction à surface et contre-surface de contact d'un élément d'un compartiment de poste électrique sous enveloppe métallique à isolation gazeuse, cette jonction comportant deux joints d'étanchéité enserrés entre la surface et la contre-surface de contact, disposés de manière à former un volume inter-joint fermé délimité par les deux joints d'étanchéité et par la surface et la contre-surface de contact, le procédé de colmatage comportant l'injection d'un produit de colmatage dans le volume inter-joint par utilisation d'un conduit de reprise de fuite aménagé dans l'épaisseur du compartiment, ce conduit débouchant dans le volume inter-joint, selon lequel :
- avant l'injection, le procédé de colmatage comporte le perçage d'un conduit d'évent différent du conduit de reprise de fuite depuis l'extérieur du compartiment jusqu'au volume inter-joint ; et
- au cours de l'injection, le produit de colmatage est injecté sous pression dans le volume inter-joint jusqu'à le remplir puis sortir par le conduit d'évent.

Ainsi, le perçage préalable d'un conduit d'évent permet d'améliorer la troisième méthode précitée. Notamment, bien que l'injection nécessite une pression supérieure à la pression atmosphérique, cette pression peut rester modérée grâce au perçage de l'évent. Par ailleurs, ce nouveau procédé de colmatage assure l'absence de toute bulle gazeuse dans le volume inter-joint.

De façon optionnelle, au cours de l'injection et après sortie par le conduit d'évent du produit de colmatage :
- le conduit d'évent est hermétiquement rebouché ; puis
- l'injection de produit de colmatage est reprise sous pression dans le volume inter-joint.

De façon optionnelle également, une profondeur du perçage du conduit d'évent est préalablement estimée par mesure, à l'aide d'une jauge, d'une profondeur du conduit de reprise de fuite.

De façon optionnelle également, le perçage du conduit d'évent est réalisé à l'aide d'un système de perçage automatisé sur la base de la profondeur mesurée du conduit de reprise de fuite, ce système de perçage automatisé comportant un gabarit de fixation monté sur la jonction à surface et contre-surface de contact ainsi qu'un mandrin de perçage à foret monté en translation sur le gabarit de fixation et déplaçable de manière à percer le conduit d'évent jusqu'à la profondeur mesurée du conduit de reprise de fuite.

De façon optionnelle également, le produit de colmatage comporte un silicone polymérisable composé au moins de deux produits réagissant entre eux pour former un polymère durcissant par polymérisation, d'un diluant pour fluidifier le polymère et d'un accélérateur de réticulation, le mélange de ces produits ainsi que l'injection du silicone polymérisable résultant étant réalisés en moins d'une heure, l'injection étant réalisée sous une pression supérieure à la pression atmosphérique mais inférieure ou égale à 10 bars, de préférence même inférieure ou égale à 6 bars.

De façon optionnelle également, le produit de colmatage comporte une graisse de silicone à microbilles de silice, l'injection étant réalisée sous une pression supérieure à la pression atmosphérique mais inférieure ou égale à 15 bars, de préférence même inférieure ou égale à 10 bars.

De façon optionnelle également :
- l'élément du compartiment de poste électrique sous enveloppe métallique est une canalisation ou extrémité de canalisation dans laquelle passent des composants électriques sous une atmosphère gazeuse isolante, notamment une atmosphère d'hexafluorure de soufre ;
- la jonction est une jonction à bride et contre-bride de cette canalisation ou extrémité de canalisation et elle comporte les deux joints d'étanchéité enserrés entre deux surfaces planes de contact respectives de la bride et de la contre-bride ;
- l'un des deux joints d'étanchéité, dit joint intérieur, étant disposé à l'intérieur d'un espace délimité par l'autre des deux joints d'étanchéité, dit joint extérieur, de manière à former le volume inter-joint, le procédé de colmatage comporte l'utilisation du conduit de reprise de fuite qui est aménagé dans au moins l'une de la bride et la contre-bride ; et
- le conduit d'évent est percé depuis l'extérieur de la jonction à bride et contre-bride jusqu'au volume inter-joint.

De façon optionnelle également, le perçage du conduit d'évent est réalisé orthogonalement à une surface latérale d'au moins l'une de la bride et la contre-bride, dans un plan contenant le joint extérieur, de manière à percer ce dernier sans aller jusqu'à percer le joint intérieur.

De façon optionnelle également :
- l'élément du compartiment de poste électrique sous enveloppe métallique est un sectionneur ; et
- la jonction est une jonction à arbre et alésage de ce sectionneur et elle comporte les deux joints d'étanchéité enserrés entre deux surfaces cylindriques de contact respectives de l'arbre et de l'alésage, les deux joints d'étanchéité étant disposés à distance l'un de l'autre autour de l'arbre de manière à former le volume inter-joint, le procédé de colmatage comportant l'utilisation du conduit de reprise de fuite qui est aménagé dans l'épaisseur du compartiment dans lequel est formé l'alésage.

Il est également proposé une jonction à surface et contre-surface de contact d'un élément d'un compartiment de poste électrique sous enveloppe métallique à isolation gazeuse, comportant :
- deux joints d'étanchéité enserrés entre la surface et la contre-surface de contact, disposés de manière à former un volume inter-joint fermé délimité par les deux joints d'étanchéité et par la surface et la contre-surface de contact ;
- un produit de colmatage injecté sous pression dans le volume inter-joint par utilisation d'un conduit de reprise de fuite aménagé dans l'épaisseur du compartiment, ce conduit débouchant dans le volume inter-joint ; et
- un conduit d'évent, différent du conduit de reprise de fuite, percé depuis l'extérieur du compartiment jusqu'au volume inter-joint et rempli du produit de colmatage.

L'invention sera mieux comprise à l'aide de la description qui va suivre, donnée uniquement à titre d'exemple et faite en se référant aux dessins annexés dans lesquels :
- la figure 1 représente schématiquement la structure générale d'un exemple non limitatif de compartiment de poste électrique sous enveloppe métallique à isolation gazeuse (ou compartiment de PSEM) présentant plusieurs jonctions à bride et contre-bride de portions ou extrémités de canalisation,
- la figure 2 représente schématiquement en coupe le détail d'un élément sectionneur de l'une des portions ou extrémité de canalisation du compartiment de PSEM de la figure 1,
- la figure 3 représente l'élément sectionneur de la figure 2 selon une autre coupe montrant une jonction à arbre et alésage de ce sectionneur,
- la figure 4 représente schématiquement en vue de face la bride, ou la contre-bride, d'une jonction à bride et contre-bride du compartiment de PSEM de la figure 1,
- la figure 5 illustre les étapes successives d'un procédé de colmatage d'une jonction à surface et contre-surface de contact d'un élément du compartiment PSEM de la figure 1, selon un mode de réalisation de l'invention,
- la figure 6 illustre l'exécution d'une étape de mesure de profondeur de perçage de conduit d'évent du procédé de la figure 5,
- la figure 7 illustre l'exécution d'une étape de perçage de conduit d'évent du procédé de la figure 5,
- la figure 8 illustre le résultat de l'exécution de l'étape de perçage de la figure 7 sur la bride ou contre-bride de la figure 4,
- la figure 9 illustre l'exécution d'une étape d'injection du procédé de la figure 5,
- la figure 10 illustre l'exécution d'une étape optionnelle de fin d'injection du procédé de la figure 5, et
- la figure 11 représente schématiquement en coupe la structure générale d'un exemple non limitatif de jonction à surface et contre-surface de contact d'un élément de compartiment de PSEM, selon un mode de réalisation de l'invention.

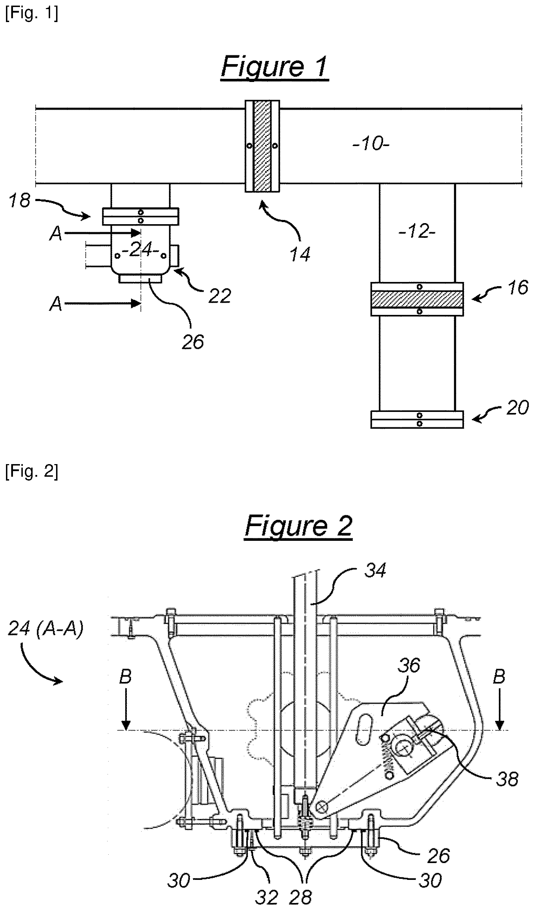

L'installation illustrée sur la figure 1 comporte une canalisation renfermant un gaz sous pression. Il s'agit d'une canalisation d'un compartiment de poste électrique sous enveloppe métallique à isolation gazeuse, autrement dit un compartiment de PSEM, dans laquelle passent notamment des câbles ou autres composants électriques sous une atmosphère gazeuse isolante d'hexafluorure de soufre.

Cette canalisation présente, à titre d'exemple purement illustratif et non limitatif, une branche principale 10, s'étendant horizontalement sur la figure 1, et une branche secondaire 12 s'étendant vers le bas depuis la branche principale 10. Elle présente en particulier différentes zones de fuites potentielles de gaz sous pression, notamment aux jonctions de brides de raccordement longitudinal de portions de canalisation, aux jonctions de brides de portions de canalisation ou de piquage cylindrique sur canalisation et de disques de rupture ou de densistat, ou aux jonctions à arbres et alésages formées dans le compartiment PSEM. Toutes ces jonctions présentent des joints d'étanchéités non visibles sur la figure 1, incluant au moins un premier joint d'étanchéité, dit joint intérieur, entre l'intérieur du compartiment de PSEM comportant le gaz sous pression et un volume inter-joint fermé, et un deuxième joint d'étanchéité, dit joint extérieur, entre le volume inter-joint fermé et l'extérieur du compartiment de PSEM.

Par exemple, la canalisation illustrée sur la figure 1 présente deux zones dans chacune desquelles deux brides de raccordement longitudinal de deux portions de canalisation sont plaquées et vissées hermétiquement l'une contre l'autre, éventuellement par l'intermédiaire d'une galette isolante. La première zone 14 est situées dans la branche principale 10 et la deuxième zone 16 est située dans la branche secondaire 12. Elles comportent effectivement chacune une bride, une contre-bride et une galette isolante s'interposant entre la bride et la contre-bride.

La canalisation présente en outre une troisième zone 18 dans laquelle une bride de piquage cylindrique sur canalisation et une bride de sectionneur sont plaquées et vissées hermétiquement l'une contre l'autre, éventuellement par l'intermédiaire d'une galette isolante. Cette troisième zone 18 est située dans la branche principale 10. Elle est à bride et contre-bride mais illustrée sans galette isolante.

La canalisation présente en outre une quatrième zone 20 dans laquelle une bride de portion de canalisation et un disque de rupture ou de densistat sont plaqués et vissés hermétiquement l'un contre l'autre, éventuellement par l'intermédiaire d'une galette isolante. Cette quatrième zone 20 est située à l'extrémité libre de la branche secondaire 12. Elle est à bride et contre-bride mais illustrée sans galette isolante.

La canalisation présente en outre une cinquième zone 22 dans laquelle un arbre d'entraînement de sectionneur est introduit, libre en rotation mais de façon hermétique à l'aide de joints d'étanchéité, dans un alésage formé dans de compartiment de PSEM. Cette cinquième zone 22 est située sur le sectionneur, luimême identifié par la référence 24, raccordé au piquage cylindrique de la branche principale 10. Elle est illustrée en détail dans la figure 2 selon une coupe A-A du sectionneur 24 indiquée dans la figure 1.

D'autres zones de fuites potentielles sont présentes dans la canalisation illustrée par la figure 1, telles que la portion inférieure du sectionneur 24 qui présente un disque de rupture 26, mais elles ne seront pas toutes détaillées.

Chacune des zones 14, 16, 18, 20 et 22 précitées constitue une fragilité de la canalisation pouvant présenter des fuites de gaz sous pression. C'est effectivement considéré comme étant le cas dans l'exemple de la figure 1. Ainsi, chacune de ces zones est pourvue d'organes de reprise de fuite, notamment sous la forme de conduits de reprise de fuite aménagés dans l'épaisseur du compartiment de PSEM.

Ces conduits permettent, lors de l'assemblage des éléments de canalisation précités, de vérifier au fur et à mesure du montage que les joints d'étanchéité, qui sont enserrés entre ces éléments à assembler de manière à former les volumes inter-joints précités, sont montés correctement. En effet, en mettant en pression chaque volume inter-joint par la reprise de fuite correspondante et en contrôlant avec un niveau à bulle la tenue en pression, la bonne mise en place de ces joints d'étanchéité peut être vérifiée et validée. Les conduits de reprise de fuite n'ont généralement pas d'autre fonction mais peuvent être avantageusement réutilisés pour réaliser un colmatage après montage.

Ainsi, de façon connue en soi, la bride et la contre-bride de la première zone 14 comportent chacune un conduit de reprise de fuite ouvert sur leur paroi latérale cylindrique extérieure et débouchant dans un volume inter-joint fermé délimité par deux joints d'étanchéité concentriques, une surface de contact de la bride (ou respectivement de la contre-bride) et une surface de contact correspondante de la galette isolante. Il en est de même pour la bride et la contre-bride de la deuxième zone 16.

De façon connue en soi également, la bride et la contre-bride de la troisième zone 18 comportent chacune un conduit de reprise de fuite ouvert sur leur paroi latérale cylindrique et débouchant dans un volume inter-joint fermé délimité par deux joints d'étanchéité concentriques, une surface de contact de la bride et une surface de contact correspondante de la contre-bride. Il en est de même pour la bride et la contre-bride de la quatrième zone 20.

Enfin, de façon connue en soi également, le sectionneur 24 comporte au moins deux conduits de reprise de fuite ouverts sur sa paroi extérieure et débouchant chacun dans un volume inter-joint fermé délimité par deux joints d'étanchéité disposés à distance l'un de l'autre autour de l'arbre d'entraînement et enserrés entre deux surfaces cylindriques de contact respectives de l'arbre d'entraînement et de l'alésage dans lequel il est introduit.

La coupe A-A du sectionneur 24 représentée sur la figure 2 montre de façon plus précise la configuration du disque de rupture 26. Il est vissé contre une surface de contact correspondante en partie inférieure du sectionneur 24. Pour étanchéifier la jonction, deux joints d'étanchéité concentriques et par exemple toriques sont enserrés entre une face supérieure du disque de rupture et la surface de contact du sectionneur 24. Le premier de ces deux joints, formant joint intérieur 28, est disposé à l'intérieur de l'espace délimité par le deuxième de ces deux joints, formant joint extérieur 30, de manière à former un volume inter-joint fermé. L'accès à ce volume inter-joint est matérialisé par un conduit de reprise de fuite 32 fermé dans la figure 2 par une vis moletée.

La coupe A-A du sectionneur 24 représentée sur la figure 2 montre également une tige de sectionnement 34 entraînée en translation verticale à l'intérieur du compartiment de PSEM par une came 36 elle-même entraînée en rotation par un arbre d'entraînement 38.

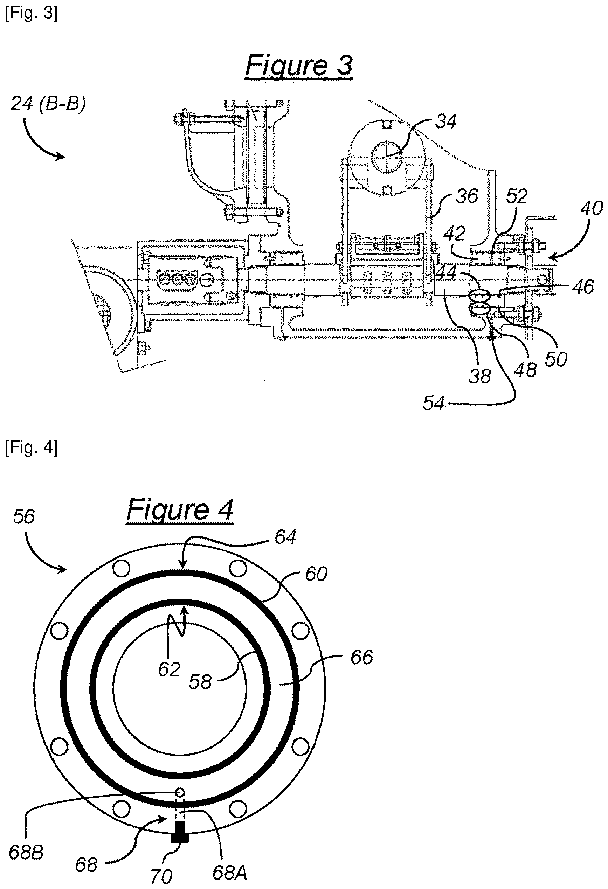

L'arbre d'entraînement 38 et son intégration dans un alésage 40 du sectionneur 24 sont détaillés dans la figure 3 selon une coupe B-B indiquée dans la figure 2.

Au niveau de l'alésage 40 situé en partie droite de la figure 3, l'arbre d'entraînement 38 est muni d'une couronne jointive 42. Cette dernière présente une surface interne cylindrique de contact avec la surface externe cylindrique de l'arbre d'entraînement 38. La jonction est rendue étanche à l'aide de deux joints d'étanchéité intérieurs toriques 44 disposés autour de l'arbre d'entraînement 38 à distance d'un joint d'étanchéité extérieur torique 46 de même diamètre également disposé autour de l'arbre d'entraînement 38 de manière à former un premier volume inter-joint autour de l'arbre d'entraînement 38.

La couronne jointive 42 présente en outre une surface externe cylindrique de contact avec la surface interne cylindrique de l'alésage 40. La jonction est rendue étanche à l'aide de deux joints d'étanchéité intérieurs toriques 48 disposés autour de la couronne jointive 42 à distance d'un joint d'étanchéité extérieur torique 50 de même diamètre également disposé autour de la couronne jointive 42 de manière à former un deuxième volume inter-joint autour de de la couronne jointive 42.

On notera que les deux volumes inter-joints ainsi créés contre les surfaces interne et externe de la couronne jointive 42 communiquent entre eux par au moins un canal 52 creusé dans son épaisseur. Un tel canal 52 est visible dans la figure 3 en partie supérieure de la couronne jointive 42. De plus, l'accès au deuxième volume inter-joint est matérialisé par un conduit de reprise de fuite 54, fermé dans la figure 3 par une vis moletée, creusé dans l'épaisseur de la paroi du sectionneur 24.

On notera également que l'arbre d'entraînement 38 est intégré de la même manière dans un autre alésage situé en partie gauche de la figure 3. Les éléments d'intégration étant les mêmes par symétrie, ils ne seront pas détaillés.

La bride 56, ou contre-bride, d'une jonction à bride et contre-bride de canalisation est représentée schématiquement en vue de face sur la figure 4. Un système d'étanchéité à joints toriques y est prévu.

Plus précisément, deux joints toriques 58, 60 concentriques sont disposés dans deux canaux annulaires respectifs 62, 64 prévus à cet effet dans la face de contact de la bride 56 (ou contre-bride) pour rendre étanche le contact avec la contre-bride (ou bride) correspondante, ou avec la galette isolante correspondante le cas échéant. Le premier joint intérieur torique 58 de moindre diamètre, prévu pour assurer une étanchéité au gaz sous pression à l'intérieur de la canalisation, est disposé dans le premier canal 62 de moindre diamètre creusé dans la face de contact de la bride ou contre-bride 56. Le deuxième joint extérieur torique 60 de diamètre supérieur, prévu pour assurer une étanchéité extérieure, en particulier une étanchéité à la pluie, est disposé dans le deuxième canal 64 de diamètre supérieur creusé lui aussi dans la face de contact de la bride ou contre-bride 56. Un volume inter-joint fermé 66 est ainsi créé entre la face de contact de la bride ou contre-bride 56, la face de contact de la contre-bride (ou bride) ou galette isolante correspondante, le premier joint intérieur torique 58 et le deuxième joint extérieur torique 60.

De façon connue en soi également, un conduit en « L » de reprise de fuite 68 est aménagé dans la bride ou contre-bride 56. Une portion radiale 68A de ce conduit traverse la bride ou contre-bride 56 dans son épaisseur depuis la surface latérale extérieure cylindrique de la bride jusqu'à une profondeur située entre les premier (58) et deuxième (60) joints toriques. Une portion transversale 68B de ce conduit, orthogonale au plan de la figure 4, s'étend à l'intérieur de la bride ou contre-bride 56 orthogonalement depuis la portion radiale 68A vers le volume inter-joint 66. Le conduit en « L » de reprise de fuite 68 relie ainsi l'extérieur de la bride ou contre-bride 56 au volume inter-joint 66 sans percer le joint extérieur 60. Dans la figure 4, il est représenté fermé par une vis moletée 70

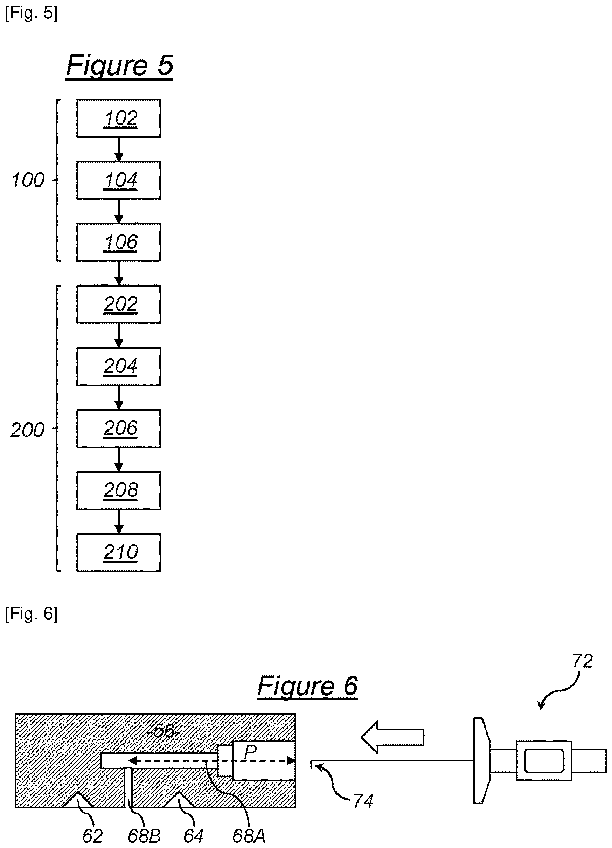

Un procédé de colmatage d'une jonction à surface et contre-surface de contact d'un élément du compartiment PSEM de la figure 1 va maintenant être décrit en référence à la figure 5.

Ce procédé s'applique à la jonction précitée entre la partie inférieure du sectionneur 24 et le disque de rupture 26 puisque cette jonction comporte deux joints d'étanchéité 28, 30 enserrés entre la surface et la contre-surface de contact, disposés de manière à former un volume inter-joint fermé accessible par un conduit de reprise de fuite 32, comme cela a été décrit précédemment en référence à la figure 2.

Il s'applique également à la jonction précitée entre l'arbre d'entraînement 38 et l'alésage 40 via la couronne jointive 42 puisque cette jonction comporte six joints d'étanchéité 44, 46, 48, 50 enserrés entre les deux paires de surfaces et contre-surfaces de contact, disposés de manière à former deux volumes inter-joint communicants et fermés accessibles par un conduit de reprise de fuite 54, comme cela a été décrit précédemment en référence à la figure 3.

Mais ce procédé va être plus précisément détaillé pour une jonction à bride et contre-bride telle que par exemple l'une quelconque des jonctions des zones 14, 16, 18 et 20 de la figure 1 qui elles aussi présentent des volumes inter-joint accessibles par des conduits de reprise de fuite, comme cela a été décrit ci-dessus en référence à la figure 4. Il est aisément généralisable aux jonctions des figures 2 et 3, ainsi qu'à toute jonction présentant un volume inter-joint fermé accessible par un conduit de reprise de fuite.

Un procédé de colmatage selon la présente invention comporte en outre essentiellement deux phases. Une première phase préliminaire 100 de préparation et une deuxième phase 200 d'injection proprement dite de produit de colmatage.

La phase préliminaire 100 comporte le perçage d'un conduit d'évent différent du conduit de reprise de fuite. Dans l'exemple de la bride ou contre-bride 56, il est destiné à être creusé dans l'épaisseur de la bride depuis l'extérieur jusqu'au volume inter-joint. Etant donné que la jonction à bride et contre-bride ne doit avantageusement pas être démontée avant le colmatage, il n'est pas toujours simple de connaître la profondeur de perçage. Quand bien même cette profondeur serait connue, ce ne serait sans doute pas de façon très précise. Pourtant, l'évent ne doit être ni trop court, car tout gaz résiduel ne pourrait pas s'échapper du volume inter-joint, ni trop long, car la pression intérieure risquerait de ne plus pouvoir être contenue par le joint intérieur 58 et le compartiment de PSEM se mettrait à fuir jusqu'à la pression atmosphérique. C'est pour cela que la phase préliminaire 100 peut commencer par une première étape optionnelle 102 d'estimation préalable d'une profondeur optimale de perçage du conduit d'évent.

Cette étape préalable 102, dont un exemple astucieux d'exécution est illustré sur la figure 6 comporte par exemple la mesure, à l'aide d'une jauge 72, d'une profondeur P du conduit de reprise de fuite 68. En pratique, étant donné que la portion radiale 68A du conduit de reprise de fuite 68 peut s'étendre à l'intérieur de la bride ou contre-bride 56 au-delà de la portion transversale 68B, notamment à une profondeur voisine de ou dépassant celle du premier canal 62, il est avantageux de prévoir une pointe coudée 74 à l'extrémité de mesure de la jauge 72. Cette pointe coudée 74 peut prendre appui à l'intersection des portions radiale 68A et transversale 68B de conduit, de sorte que la mesure de la profondeur P, située correctement entre celles des premier 62 et deuxième 64 canaux, peut être précisément mesurée en tant que profondeur optimale à creuser pour le conduit d'évent.

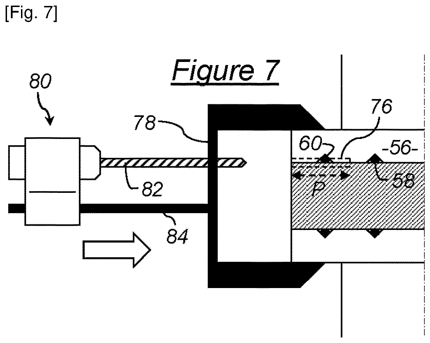

L'étape préalable 102 est suivie d'une étape de perçage 104, dont un exemple astucieux d'exécution est illustré sur la figure 7.

Ce perçage du conduit d'évent (représenté en pointillés par la référence 76 sur la figure 7) est réalisé à l'aide d'un système de perçage automatisé, avec contrôle en temps réel de la profondeur de perçage, sur la base de la profondeur P mesurée du conduit de reprise de fuite 68. Le système de perçage automatisé comporte un gabarit de fixation 78 monté sur la jonction à surface et contre-surface de contact ainsi qu'un mandrin de perçage 80 à foret 82 monté en translation sur un rail 84 du gabarit de fixation 78 et déplaçable de manière à percer précisément le conduit d'évent 76 jusqu'à la profondeur mesurée P. Le gabarit de fixation 78 prend par exemple la forme d'une pince, enserrant la bride et la contre-bride, solidaire du rail 84 monté orthogonalement par rapport à la surface latérale cylindrique de la bride ou contre-bride 56. Le mandrin de perçage 80 est monté sur le rail 84 de telle sorte que le foret 82 soit dans le plan des deux joints d'étanchéité concentriques 58 et 60.

Ainsi, lors du perçage du conduit d'évent 76 indiqué en pointillés sur la figure 7, le joint d'étanchéité extérieur 60 est lui aussi percé sans aller jusqu'à percer le joint d'étanchéité intérieur 58, à condition que la profondeur P soit correctement estimée. On comprend alors tout l'intérêt de l'étape préalable 102 qui permet d'assurer que le joint d'étanchéité intérieur 58 ne soit pas atteint lors du perçage.

En pratique, le conduit d'évent 76 peut être percé à 3,3 mm de diamètre puis taraudé en M4 ou, si cela ne s'avère pas suffisant pour évacuer tout gaz présent dans le volume inter-joint 66 lors de l'injection de produit de colmatage, à 4,2 mm de diamètre puis taraudé en M5.

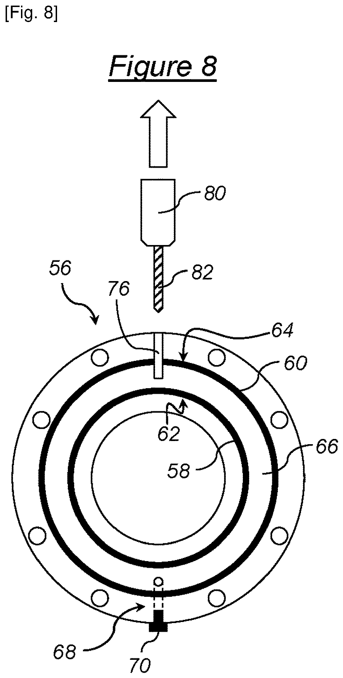

Le résultat du perçage 104 est illustré sur la figure 8. Le conduit d'évent 76 est percé dans le plan de la surface de contact de la bride ou contre-bride 56 et le joint d'étanchéité extérieur 60 est lui aussi percé. De préférence et dans la mesure du possible, le conduit d'évent 76 est diamétralement opposé au conduit de reprise de fuite 68, ou au moins suffisamment éloigné pour permettre un bon écoulement du produit de colmatage à injecter dans tout le volume inter-joint 66.

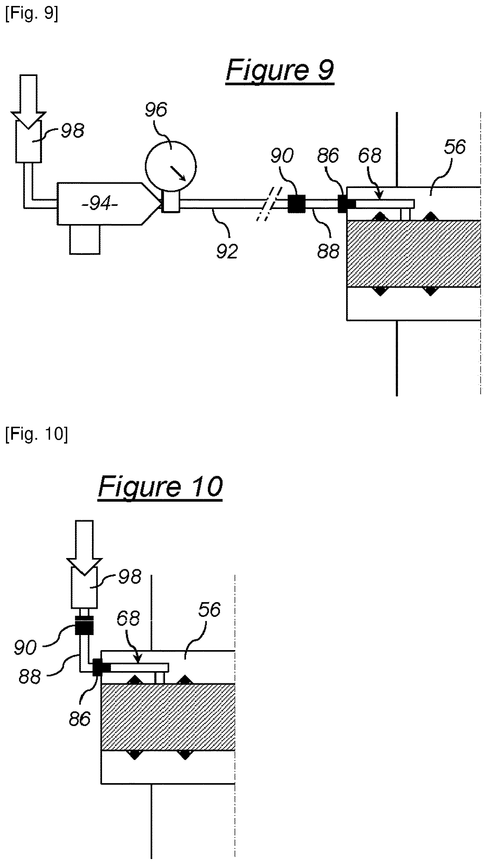

La phase préliminaire 100 se termine par une étape 106 de montage d'une installation d'injection de produit de colmatage. Un exemple non limitatif d'une telle installation est par exemple illustré sur la figure 9.

Au cours de cette étape de montage 106, la vis moletée 70 est tout d'abord retirée du conduit de reprise de fuite 68 de la bride ou contre-bride 56 et remplacée par un élément 86 de raccord de tuyau d'alimentation en produit de colmatage, par exemple un graisseur à clapet anti-retour lorsque le produit de colmatage comporte une graisse. Dans ce cas, il est avantageux de prévoir plusieurs graisseurs de diamètres différents pour s'adapter à toutes les configurations possibles.

Une première portion de tuyau d'alimentation 88, par exemple d'une dizaine de centimètres de longueur, est raccordée à l'élément 86 et à un autre élément de raccord 90 à son autre extrémité. Une deuxième portion de tuyau d'alimentation 92, par exemple d'environ un mètre de longueur voire plus, est raccordée à l'élément 90 et à un injecteur motorisé 94, par exemple un pistolet d'injection à cartouche(s) de produit de colmatage, muni à son extrémité d'injection d'un manomètre 96 pour le contrôle de la pression d'injection. Enfin, l'injecteur motorisé 94 est raccordé à un compresseur 98 qui commande les éventuelles variations de la pression d'injection.

La deuxième phase 200 d'injection proprement dite de produit de colmatage peut alors démarrer.

Au cours d'une première étape 202 de cette deuxième phase 200, le produit de colmatage est préparé.

Selon un premier mode de réalisation, le produit de colmatage comporte un silicone polymérisable composé au moins de deux produits réagissant entre eux pour former un polymère durcissant par polymérisation, d'un diluant pour fluidifier le polymère et d'un accélérateur de réticulation permettant de contrer l'augmentation du temps de travail induite par le diluant. De tels silicones polymérisables à multiples composants existent dans le commerce de sorte que leurs proportions à respecter ne seront pas détaillées puisqu'elles sont généralement indiquées par le fabricant.

Le produit de colmatage est préparé par mélange lors de cette étape 202, sachant que le mélange des produits précités ainsi que l'injection du silicone polymérisable résultant doivent généralement être réalisés en moins de deux heures, de préférence en moins d'une heure. En effet ce silicone polymérisable étant un produit thermodurcissable élastomère, il est associé à un temps de travail relativement court. Passé ce délai, il commence sa phase de polymérisation qui rend l'injection de plus en plus difficile, voire impossible.

Dès que le mélange est réalisé, le silicone polymérisable résultant est placé dans une cloche à vide pour éliminer tout gaz, puis dans une cartouche d'injection adaptée pour une insertion dans l'injecteur motorisé 94. En variante et afin de travailler plus rapidement et plus simplement, ce mélange peut être industrialisé par préparation en amont des produits (en volumes, proportions, poids, etc.) dans des cartouches différentes prêtes à l'emploi et dégazées, le mélange ne se réalisant qu'à l'injection. Cela nécessite l'utilisation d'un injecteur motorisé 94 compatible avec une telle pluralité de cartouches dont le mélange se fait à l'injection. Par ailleurs, chaque cartouche peut être conditionnée pour réaliser une ou plusieurs injections en fonction des conditions d'injection, notamment en fonction de la température extérieure. On notera que selon cette variante l'utilisation d'une cloche à vide n'est pas nécessaire et que l'étape de préparation 202 se résume au placement des cartouches prêtes à l'emploi dans l'injecteur motorisé 94.

Selon un deuxième mode de réalisation, le produit de colmatage comporte une graisse, par exemple une graisse de silicone à microbilles de silice, dont la haute viscosité permet de combler les fuites au fur et à mesure de son injection dans le volume inter-joint 66. De telles graisses existent dans le commerce de sorte que leur composition ne sera pas détaillée puisqu'elle est généralement indiquée par le fabricant.

La graisse est placée dans une cartouche d'injection adaptée pour une insertion dans l'injecteur motorisé 94. En variante et afin de travailler plus rapidement et plus simplement, la graisse est fournie en cartouche prête à l'emploi. L'étape de préparation 202 se résume alors au placement de la cartouche prête à l'emploi dans l'injecteur motorisé 94.

Au cours d'une deuxième étape 204 de la deuxième phase 200, le produit de colmatage est injecté dans le volume inter-joint 66 par utilisation du conduit de reprise de fuite 68 à l'aide de l'installation montée au cours de l'étape 106 et par exemple illustrée par la figure 9. Cette injection est réalisée sous pression, notamment par pressions successives en cycles commandées par le compresseur 98 et éventuellement maîtrisées par le manomètre 96, jusqu'à remplir le volume inter-joint 66 puis sortir par le conduit d'évent 76.

Etant donné le perçage préalable du conduit d'évent 76, la pression d'injection est avantageusement modérée. Elle peut même être considérée comme faible au vu du contexte de PSEM. Par exemple, conformément au premier mode de réalisation selon lequel le produit de colmatage est un silicone polymérisable, l'injection est réalisée sous une pression supérieure à la pression atmosphérique mais inférieure ou égale à 10 bars, de préférence même inférieure ou égale à 6 bars. Par exemple également, conformément au deuxième mode de réalisation selon lequel le produit de colmatage est une graisse de viscosité suffisante, l'injection est réalisée sous une pression supérieure à la pression atmosphérique mais inférieure ou égale à 15 bars, de préférence même inférieure ou égale à 10 bars.

A la fin de l'étape 204, il peut déjà être considéré qu'il ne reste pas de gaz résiduel dans le volume inter-joint 66.

Au cours d'une étape 206 suivante de la deuxième phase 200, le conduit d'évent 66 est hermétiquement rebouché. Cela peut être réalisé à l'aide d'une vis moletée, M4 ou M5 selon le perçage du conduit d'évent 66, similaire à la vis moletée 70.

Au cours d'une étape 208 suivante de la deuxième phase 200, l'injection du produit de colmatage est reprise sous pression dans le volume inter-joint, toujours à l'aide de l'installation montée au cours de l'étape 106 et dans les mêmes conditions qu'à l'étape 204. En ce qui concerne les pressions successives, elles peuvent être réalisées selon un protocole d'injection à plusieurs dizaines de cycles d'injection de l'injecteur motorisé 94, notamment une quarantaine, pour bien comprimer et augmenter la quantité de produit de colmatage dans le volume inter-joint 66 sous une pression maximale restant malgré tout modérée et inférieure aux plafonds précités.

En fin d'injection, en particulier lorsque le produit est à base de silicone polymérisable, la première portion de tuyau d'alimentation 88 est désolidarisée de la deuxième portion 92 et directement raccordée au compresseur 98 à l'aide par exemple de l'élément de raccord 90. Cette première portion 88 est suspendue à la verticale afin de s'assurer que de l'air ne se fraie pas un chemin jusqu'au point d'injection et que le silicone polymérisable se maintienne dans le volume inter-joint 66. L'installation se présente alors telle qu'illustrée sur la figure 10. Elle est laissée telle quelle pendant au moins douze heures pour laisser le temps au silicone polymérisable de durcir, sous une pression constante commandée de 6 bars par exemple, avant d'être ensuite démontée.

En cas de température extérieure inférieure au domaine préconisé par le fabricant du produit de colmatage à base de silicone polymérisable, il est conseillé de mettre en place une couverture chauffante autour de la jonction pour permettre la polymérisation dans le délai indiqué.

Enfin, au cours d'une dernière étape de démontage 210, l'installation de la figure 9 ou 10 est démontée, seuls les éléments de raccord 86, 90 et la première portion de tuyau d'alimentation 88 pouvant être éventuellement maintenus, cette dernière formant nourrice pour d'éventuelles futures reprises de colmatage.

Plusieurs configurations sont possibles à ce stade :
- tout est démonté et la vis moletée 70 est réintroduite dans le conduit de reprise de fuite 68, ou
- seul l'élément de raccord 86 est maintenu, notamment lorsqu'il s'agit d'un graisseur à clapet anti-retour, ou
- la nourrice est maintenue avec ses deux éléments de raccord 86, 90.

Sachant que la première portion de tuyau d'alimentation 88 est en fait optionnelle, en particulier lorsque le produit de colmatage est une graisse, la deuxième portion de tuyau d'alimentation 92 pouvant alors être directement raccordée au conduit de reprise de fuite 68 par l'intermédiaire de l'élément de raccord 86, il convient de noter que les deux dernières configurations permettent une reprise immédiate du colmatage si nécessaire, notamment en cas d'apparition de fuite ultérieure. Elles permettent également d'identifier que la jonction concernée a déjà été colmatée. Elles permettent enfin de maintenir le produit de colmatage sous pression dans le volume inter-joint 66.

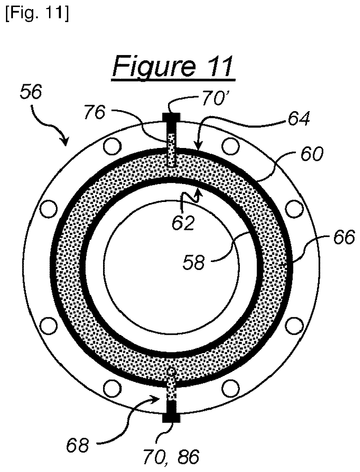

A la fin de l'exécution du procédé de colmatage décrit précédemment, la jonction à bride et contre-bride illustrée dans les figures 4 à 10 se présente sous la forme illustrée schématiquement sur la figure 11.

Elle comporte les deux joints d'étanchéité 58 et 60 enserrés entre la bride ou contre-bride 56 et l'autre surface de contact correspondante (respectivement contre-bride ou bride ou galette isolante), disposés de manière à former le volume inter-joint fermé 66 délimité par les deux joints d'étanchéité 58, 60 et par les surface et contre-surface de contact.

Elle comporte en outre le produit de colmatage, notamment en silicone polymérisable ou graisse, injecté sous pression dans le volume inter-joint 66 par utilisation du conduit de reprise de fuite 68 qui débouche dans le volume inter-joint 66.

Enfin et conformément à l'invention, elle comporte le conduit d'évent 76, différent du conduit de reprise de fuite 68, percé depuis l'extérieur jusqu'au volume inter-joint 66 et rempli lui aussi du produit de colmatage éventuellement sous pression. On notera que le conduit d'évent 76 est rebouché à l'aide d'une vis moletée 70' similaire à la vis moletée 70 du conduit de reprise de fuite 68. Ce dernier est, quant à lui, rebouché à l'aide soit de la vis moletée 70 soit de l'élément de raccordement 86, en particulier lorsqu'il s'agit d'un élément à clapet anti-retour.

Ce résultat visible sur la jonction à bride et contre-bride de la figure 11 est, comme indiqué précédemment, généralisable à toute jonction à surface et contre-surface de contact d'un élément d'un compartiment de PSEM comportant (au moins) deux joints d'étanchéité enserrés entre la surface et la contre-surface de contact, disposés de manière à former un volume inter-joint fermé délimité par les deux joints d'étanchéité et par la surface et la contre-surface de contact, et un conduit de reprise de fuite aménagé dans l'épaisseur du compartiment pour déboucher dans le volume inter-joint. Il est notamment généralisable à toutes les jonctions évoquées en référence aux figures 1 à 3.

Il apparaît clairement qu'un procédé de colmatage tel que celui décrit précédemment permet un colmatage interne simple à mettre en œuvre, rapide et efficace qui tire profit de la présence d'un conduit de reprise de fuite et ne nécessite pas de pression d'injection trop forte tout en assurant l'absence de toute bulle gazeuse résiduelle dans le volume inter-joint après colmatage.

On peut en outre noter les avantages supplémentaires suivants :
- un tel procédé peut être mis en oeuvre dès lors qu'une jonction à surface et contre-surface de contact, à deux joints d'étanchéité enserrés entre la surface et la contre-surface de contact et à conduit de reprise de fuite débouchant dans le volume inter-joint présente une fuite, que celle-ci soit localisée ou non,
- l'utilisation d'un silicone polymérisable ou d'une graisse rend le colmatage réversible sans risque d'endommager la jonction,
- le coût final d'un tel colmatage, en outils réutilisables (jauge, système de perçage automatisé, compresseur, injecteur motorisé, manomètre), consommables (cartouches, tuyaux et éléments de raccordement) et main d'œuvre, est très inférieur à ce qui est proposé dans l'état de la technique dans la mesure où cela permet en plus de ne pas consigner l'ouvrage, l'exploitation de ce dernier pouvant ainsi se poursuivre,
- le colmatage résultant s'avère tout aussi efficace dans le temps (à l'échelle de plusieurs années),
- il permet de prolonger la durée de vie des assemblages concernés sans remise à niveau plus lourde à mettre en œuvre.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Procédé de colmatage d'une jonction (14, 16, 18, 20, 22, 26) à surface et contre-surface de contact d'un élément (10, 12, 24) d'un compartiment de poste électrique sous enveloppe métallique à isolation gazeuse, cette jonction comportant deux joints d'étanchéité (28, 30 ; 44, 46, 48, 50 ; 58, 60) enserrés entre la surface et la contre-surface de contact (26 ; 38, 40, 42 ; 56), disposés de manière à former un volume inter-joint fermé (66) délimité par les deux joints d'étanchéité (28, 30 ; 44, 46, 48, 50 ; 58, 60) et par la surface et la contre-surface de contact (26 ; 38, 40, 42 ; 56), le procédé de colmatage comportant l'injection (200) d'un produit de colmatage dans le volume inter-joint (66) par utilisation d'un conduit de reprise de fuite (32 ; 54 ; 68) aménagé dans l'épaisseur du compartiment, ce conduit (32 ; 54 ; 68) débouchant dans le volume inter-joint (66), **caractérisé en ce que** :
- avant l'injection (200), le procédé de colmatage comporte le perçage (104) d'un conduit d'évent (76) différent du conduit de reprise de fuite (32 ; 54 ; 68) depuis l'extérieur du compartiment jusqu'au volume inter-joint (66) ; et
- au cours de l'injection (200), le produit de colmatage est injecté (204) sous pression dans le volume inter-joint (66) jusqu'à le remplir puis sortir par le conduit d'évent (76).

2. Procédé de colmatage selon la revendication 1, dans lequel, au cours de l'injection (200) et après sortie par le conduit d'évent (76) du produit de colmatage :
- le conduit d'évent (76) est hermétiquement rebouché (206) ; puis
- l'injection de produit de colmatage est reprise (208) sous pression dans le volume inter-joint (66).

3. Procédé de colmatage selon la revendication 1 ou 2, dans lequel une profondeur (P) du perçage du conduit d'évent (76) est préalablement estimée (102) par mesure, à l'aide d'une jauge (72), d'une profondeur (P) du conduit de reprise de fuite (32 ; 54 ; 68).

4. Procédé de colmatage selon la revendication 3, dans lequel le perçage du conduit d'évent (104) est réalisé à l'aide d'un système de perçage automatisé sur la base de la profondeur (P) mesurée du conduit de reprise de fuite (32 ; 54 ; 68), ce système de perçage automatisé comportant un gabarit de fixation (78) monté sur la jonction à surface et contre-surface de contact (26 ; 38, 40, 42 ; 56) ainsi qu'un mandrin de perçage (80) à foret (82) monté en translation sur le gabarit de fixation (78) et déplaçable de manière à percer le conduit d'évent (76) jusqu'à la profondeur (P) mesurée du conduit de reprise de fuite (32 ; 54 ; 68).

5. Procédé de colmatage selon l'une quelconque des revendications 1 à 4, dans lequel le produit de colmatage comporte un silicone polymérisable composé au moins de deux produits réagissant entre eux pour former un polymère durcissant par polymérisation, d'un diluant pour fluidifier le polymère et d'un accélérateur de réticulation, le mélange (202) de ces produits ainsi que l'injection (204, 208) du silicone polymérisable résultant étant réalisés en moins d'une heure, l'injection étant réalisée sous une pression supérieure à la pression atmosphérique mais inférieure ou égale à 10 bars, de préférence même inférieure ou égale à 6 bars.

6. Procédé de colmatage selon l'une quelconque des revendications 1 à 4, dans lequel le produit de colmatage comporte une graisse de silicone à microbilles de silice, l'injection étant réalisée sous une pression supérieure à la pression atmosphérique mais inférieure ou égale à 15 bars, de préférence même inférieure ou égale à 10 bars.

7. Procédé de colmatage selon l'une quelconque des revendications 1 à 6, dans lequel :
- l'élément du compartiment de poste électrique sous enveloppe métallique est une canalisation ou extrémité de canalisation (10, 12) dans laquelle passent des composants électriques sous une atmosphère gazeuse isolante, notamment une atmosphère d'hexafluorure de soufre ;
- la jonction est une jonction à bride et contre-bride (14, 16, 18, 20) de cette canalisation ou extrémité de canalisation (10, 12) et elle comporte les deux joints d'étanchéité (58, 60) enserrés entre deux surfaces planes de contact respectives de la bride et de la contre-bride ;
- l'un des deux joints d'étanchéité, dit joint intérieur (58), étant disposé à l'intérieur d'un espace délimité par l'autre des deux joints d'étanchéité, dit joint extérieur (60), de manière à former le volume inter-joint (66), le procédé de colmatage comporte l'utilisation du conduit de reprise de fuite (68) qui est aménagé dans au moins l'une (56) de la bride et la contre-bride ; et
- le conduit d'évent (76) est percé depuis l'extérieur de la jonction à bride et contre-bride jusqu'au volume inter-joint (66).

8. Procédé de colmatage selon la revendication 7, dans lequel le perçage (104) du conduit d'évent (76) est réalisé orthogonalement à une surface latérale d'au moins l'une (56) de la bride et la contre-bride, dans un plan contenant le joint extérieur (60), de manière à percer ce dernier sans aller jusqu'à percer le joint intérieur (58).

9. Procédé de colmatage selon l'une quelconque des revendications 1 à 6, dans lequel :
- l'élément du compartiment de poste électrique sous enveloppe métallique est un sectionneur (24) ; et
- la jonction est une jonction à arbre (38) et alésage (40) de ce sectionneur (24) et elle comporte les deux joints d'étanchéité (44, 46, 48, 50) enserrés entre deux surfaces cylindriques de contact respectives de l'arbre (38) et de l'alésage (40), les deux joints d'étanchéité (44, 46, 48, 50) étant disposés à distance l'un de l'autre autour de l'arbre (38) de manière à former le volume inter-joint, le procédé de colmatage comportant l'utilisation du conduit de reprise de fuite (54) qui est aménagé dans l'épaisseur du compartiment dans lequel est formé l'alésage (40).

10. Jonction à surface et contre-surface de contact (26 ; 38, 40, 42 ; 56) d'un élément d'un compartiment de poste électrique sous enveloppe métallique à isolation gazeuse, comportant :
- deux joints d'étanchéité (28, 30 ; 44, 46, 48, 50 ; 58, 60) enserrés entre la surface et la contre-surface de contact (26 ; 38, 40, 42 ; 56), disposés de manière à former un volume inter-joint fermé (66) délimité par les deux joints d'étanchéité (28, 30 ; 44, 46, 48, 50 ; 58, 60) et par la surface et la contre-surface de contact (26 ; 38, 40, 42 ; 56) ;
- un produit de colmatage injecté sous pression dans le volume inter-joint (66) par utilisation d'un conduit de reprise de fuite (32 ; 54 ; 68) aménagé dans l'épaisseur du compartiment, ce conduit (32 ; 54 ; 68) débouchant dans le volume inter-joint (66) ;
**caractérisée en ce qu'**elle comporte en outre un conduit d'évent (76), différent du conduit de reprise de fuite (32 ; 54 ; 68), percé depuis l'extérieur du compartiment jusqu'au volume inter-joint (66) et rempli du produit de colmatage.
